Europäisches Patentamt

European Patent Office

Office européen des brevets

(19)

(11) **EP 1 703 645 A1**

(12) **EUROPEAN PATENT APPLICATION**

(43) Date of publication:
 **20.09.2006 Bulletin 2006/38**

(51) Int Cl.:
 ***H04B 7/06*** *(2006.01)*    *H04Q 7/38* *(2006.01)*

(21) Application number: **06004503.6**

(22) Date of filing: **06.03.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **04.03.2005 US 658547 P**

(71) Applicants:
 • **Samsung Electronics Co., Ltd.**
   **Suwon-si**
   **Gyeonggi-do (KR)**
 • **Seoul National University Industry Foundation**
   **Seoul (KR)**

(72) Inventors:
 • **Kim, Ho-Jin**
   **c/oSamsung Electronics Co. Ltd.,**
   **Gyeonggi-do (KR)**
 • **Kim, Sung-Jin**
   **c/oSamsung Electronics Co. Ltd.,**
   **Gyeonggi-do (KR)**
 • **Lee, Kwang-Bok**
   **Gangnam-gu**
   **Seoul (KR)**

(74) Representative: **Grünecker, Kinkeldey,**
   **Stockmair & Schwanhäusser**
   **Anwaltssozietät**
   **Maximilianstrasse 58**
   **80538 München (DE)**

(54) **User scheduling method for multiuser MIMO communication system**

(57)  In multiuser multiple-input multiple-output (MIMO) systems in which a base station performs scheduling on the basis of channel information fed back from a plurality of terminals, the user scheduling method of the present invention includes calculating a metric for scheduling the users using the channel information, selecting one of at least two preinstalled scheduling schemes according to the metric, and performing the scheduling with the selected scheduling scheme. The user scheduling method of the present invention performs scheduling with one of TDMA- and STMA-based scheduling schemes which show maximum capacity in different channel environments, such that the system capacity can be optimally maintained even when the channel environment is changed.

FIG.1

EP 1 703 645 A1

**Description**

**BACKGROUND OF THE INVENTION**

1. Field of the Invention

The present invention relates generally to a multiple-input multiple-out (MIMO) communication system and more particularly to a user scheduling method for multiuser MIMO communication system.

2. Description of the Related Art

Recently, the high-rate data transmission has been one of key issues in wireless mobile communications. Multiple-input multiple-output (MIMO) is an emerging technology offering high spectral efficiency with the increased link reliability and interference suppression.

Based on the basic multiple antenna technologies, a lot of hybrid methods have been brought up for higher performance gain. MIMO can be separated into two structures which are open-loop (OL) and closed-loop (CL) systems. In OL-MIMO, the transmitter has no channel information for data transmissions, and hence fixed transmit parameters are used. CL-MIMO exploits the channel state information for transmissions.

Most previous MIMO schemes are based on point-to-point communications at a time, i.e., single user MIMO (SU-MIMO). In multiuser MIMO (MU-MIMO) systems, all users are coordinated for communications by considering scheduling algorithms and quality of service (QoS) requirements of each user. In the case of CL-MIMO with multiple users, the complexity is of a concern, including feedback signaling, multiuser scheduling, and transmit/receive optimization, etc. Recently, the industrial organizations have proposed their MIMO techniques in 3$^{rd}$ generation partnership project (3GPP) standardizations. In 3GPP, various multi-antenna schemes are discussed, especially when combined with high speed downlink packet access (HSDPA).

Recently, a promising new MIMO technique called Per-Antenna-Rate-Control (PARC) has been proposed to enhance the data rates of the MIMO antenna systems used in 3GPP systems. The PARC technique is based on a combined transmit/receive architecture which performs independent coding of antenna streams at different rates that are transmitted to and decoded at the mobile terminal device.

Unfortunately, the PARC technique is limited to the case where the number of transmitted data streams is strictly equal to the number of transmit antennas in the base station. Also, the PARC shows a significant performance gap between the OL capacity and the CL capacity when signal-to-noise ratio (SNR) is low and/or the number of receive antennas is less than the number of transmit antennas.

A Selective-PARC (S-PARC) has been a proposal to overcome the performance gap of the PARC with the gain of antenna selection. The S-PARC adaptively selects the number of antennas, i.e., mode, and the best subset of antennas for the selected mode. Interestingly, S-PARC will operate like a single stream transmit diversity with transmit antenna selection if the number of the selected antennas is limited to one.

However, the S-PARC has a drawback in that the capacity over the number of users is limited because the S-PARC only exploits one transmit antenna with the partial feedback.

**SUMMARY OF THE INVENTION**

The present invention has been made in an effort to solve the above and other problems occurring in the prior art, and it is an object of the present invention to provide a multiuser MIMO communication method which is capable of enhancing system performance by selectively exploiting a user scheduling scheme adaptive to the number of users.

It is another object of the present invention to provide a multiuser MIMO communication method which is capable of reducing receiver complexity and the amount feedback.

In order to achieve the above objects, the user scheduling method of the present invention for multiuser multiple-input multiple-output (MIMO) systems in which a base station performs scheduling on the basis of channel information fed back from a plurality of terminals, includes calculating a metric for scheduling the users using the channel information, selecting one of at least two preinstalled scheduling schemes according to the metric, and performing the scheduling with the selected scheduling scheme.

**BRIEF DESCRIPTION OF THE DRAWINGS**

The above and other objects, features, and advantages of the present invention will be more apparent from the following detailed description taken in conjunction with the accompanying drawings, in which:

FIG. 1 is a block diagram illustrating a transmitter of a wireless communication system according to an embodiment of the present invention;

FIG. 2 is a flowchart illustrating a user scheduling method according to one embodiment of the present invention;

FIG. 3 is a graph illustrating a simulation results of performance comparisons between the MIMO transmission method according to an embodiment of the present invention with or without beamforming and a conventional MIMO transmission method;

FIG. 4 is a graph illustrating another simulation results of the performance comparisons between the MIMO transmission method according to one embodiment of the present invention with or without partial feedback and conventional ones; and

FIG. 5 is a graph illustrating a simulation results of performance comparisons between the MIMO transmission method according to another embodiment of the present invention and a conventional MIMO transmission.

## DETAILED DESCRIPTION OF THE PREFERRED EMBODIMENTS

Preferred embodiments of the present invention will be described in detail hereinafter with reference to the accompanying drawings. In the following description of the present invention, a detailed description of known functions and configurations incorporated herein will be omitted when it may obscure the subject matter of the present invention.

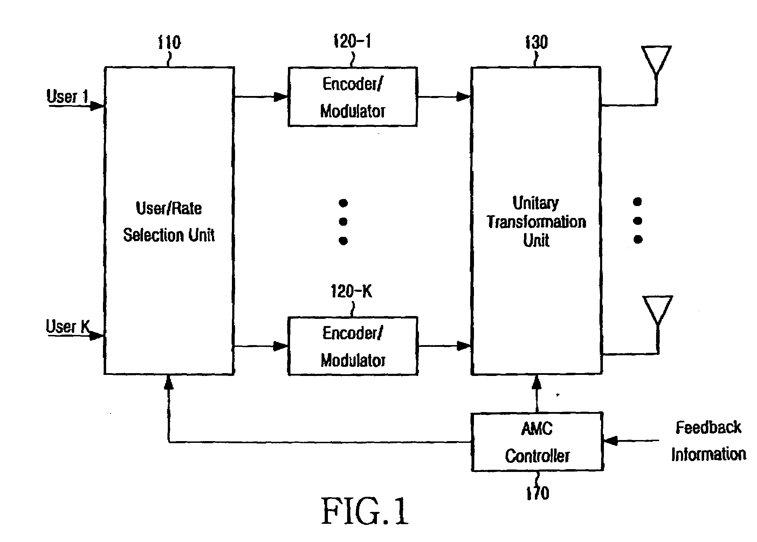

FIG. 1 is a block diagram illustrating a transmitter of a wireless communication system according to an embodiment of the present invention.

As shown in FIG. 1, the transmitter includes a user/rate selection unit (110) for selecting users to which incoming data be transmitted and data rates of the respective users based on the adaptive modulation and coding (AMC) information provided by an AMC controller (170) which computes the AMC information using the feedback information from the terminals (not shown). The user/rate selection unit (110) outputs the data to be transmitted to the user terminals to corresponding encoder/modulator units (120-1,..., 120-k) in parallel. The encoder/modulator units (120-1,...,120-k) perform encoding and modulation to the respective data and output the encoded/modulated signals to a unitary transformation unit (130). The unitary transformation unit (130) transforms the encoded/modulated signals according to the AMC information provided by the AMC controller (170) and transmits the transformed signals through corresponding transmit antennas.

In one embodiment of the present invention, a multiuser MIMO scheme using the unitary basis matrix, which is called per-user unitary rate control (PU2RC), will be adopted.

In the system of FIG. 1, the received signal vector is expressed as:

$$y_k = H_k Ts + n_k \tag{1}$$

where $H_k$ is the $M_r$ x $M_t$ MIMO channel matrix from the base station (BS) to the kth mobile station (MS) and k=1,...,K. $n_k$ is the additive white Gaussian noise. Transmit beamforming is denoted as Ts where $T=[t_1,...,t_L]$ is the beamforming matrix. Since PU2RC is a STMA scheme, each s, is allocated to users independently, i.e., it can be allocated to different users. s is the transmit data stream as L x 1.

In this embodiment of the present invention, the beamforming matrix T is a unitary matrix, i.e., $T^H T=I_L$ (where L is the total number of transmit streams and $L £ M_t$) in order to improve the capacity obtained by the matched filter beamforming (hereinafter denoted by unitary matched filter beamforming (LTMF-BF)). Although UMF-BF is much simpler to implement than other transmit precoding methods such as dirty-paper coding (DPC), UMF-BF combined with the space-domain user diversity leads to significant capacity performance improvement.

The sum rate of both UMF-BF and DPC scales as $M_t log KM_r$ when $K$ is large. To utilize user diversity in the space and time domains, T is obtained by

$$t_l = \arg\max_{v_{k,m}} c_f(r_m(v_{k,m})), \, l = 1,...,L \tag{2}$$

subject to $T^H T=I_L$,

where $v_{k,m}$ is the quantized version of mth eigenvector of $(H_k^H H_k)$ by use of a subspace packing such as Grassmannian line packing, and $r_k(V_{k,m})$ is the received SINR function of $V_{k,m}$ for the kth *user*. $r_k(t_l)$ can be expressed as:

$$r_k(\mathsf{t}_l)^3 \; \frac{\left|b^H H_k \mathsf{t}_l\right|^2}{\left\|b^H H_k\right\|^2 - \left|b^H H_k \mathsf{t}_l\right|^2 + \dfrac{L}{P}\|b\|^2} \tag{3}$$

where b is the receive beamforming vector for the $k$th user and $t_l$, and the equality holds if $L \, \pounds \, M_t$. PU2RC incorporating UMF-BF at the transmitter offers the following two advantages: simplified user diversity in the space domain, and effective calculation of received SINRs.

The CL-MIMO obtains channel information at the transmitter through feedback channel. In this embodiment, two types of channel information are fed back to the transmitter, i.e., the beamforming vectors and the corresponding channel qualities. More specifically, the beamforming vectors and the channel qualities are the quantized eigenvectors and the received SINRs of each user, which are expressed as $\{V_{k,m}\}_m$, and $\{\rho_m(V_{k,m})\}_m$, respectively. The quantized vectors are considered from the set predefined by a subspace packing, where the beam selection is preferable to the eigen-decomposition which is practically difficult to implement. In particular, the set of selected vectors correspond to the maximum sum rate at the receiver and are optionally constrained to be orthonormal to each other. According to characteristics of feedback information described above, three feedback protocols can be considered: full feedback, partial feedback, and hybrid feedback protocols. The information of the $k$th user for feedback signaling is given by:

$$F_{A,k} = \left\{ g_k, \{g_{M,k,m}\}_{m=1,\ldots,M_l} \right\} \tag{4}$$

$$F_{B,k} = \left\{ g_k, m_S, g_{M,k,m_s} \right\} \tag{5}$$

which represents the full feedback and the partial feedback protocols, respectively, where $g_k$ is the index of the set of the selected vectors, and $\{g_{M,k,m}\}_m$ are the received SINRs estimated at the receiver based on $g_k$. Note that all $\{g_{M,k,m}\}_m$ denote the post-decoding SINRs based on the MMSE reception. To reduce the burden of feedback, $F_{B,k}$ contains the maximum SINR $g_{M,k,m_s}$ as well as its index $m_s$, instead of SINRs for all vectors in (4), where

$$g_{M,k,m_s} = \max_{m=1,\ldots,M_l} g_{M,k,m}. \tag{6}$$

In practice, the feedback protocol $F_{B,k}$ is organized as follows. A 1-bit is user to specify $g_k$, a 2-bit denotes $m_s$, and a 5-bit is assigned to $g_{M,k,m}$. The last 5-bit has been used for the SINR feedback signaling in the HSDPA specifications. Finally, the protocol for hybrid feedback is given by:

$$F_{C,k} = \left\{ g_k, m_S, g_{M,k,m_s}, \{g_{S,k,m}\}_{m^1 \; m_s} \right\} \tag{7}$$

where SINRs are included for both MMSE and SIC receiver structures (i.e., $g_{M,k,ms}$ and $g_{S,k,m}$, respectively), while the number of SINRs in (7) and (4).

In one embodiment of the present invention, MIMO broadcast channel is proposed with the multi-user MIMO scheme. Scheduling methodology is considered because all users cannot be served at the same time due to the limited resources (e.g., the number of antennas, transmit power, etc.). Scheduling schemes are exploited with the user diversity for MIMO systems when advanced receivers, i.e., SIC receivers, are utilized.

In MIMO systems, two basic scheduling methods have been considered. One of them is that all the transmit antennas are assigned to a single user selected based on the single user multiplexing methods. Regardless of a receiver structure (whether SIC or not), its capacity is expressed as:

$$C_A(t) = \max_k \sum_m c_f(g_{k,m}(t)) \tag{8}$$

where $g_{k,m}(t)$ can be either $g_{S,k,m}(t)$ or $g_{M,k,m}$. The other one is that all users compete independently for each transmit antenna for performance enhancement. The capacity of this scheme heavily depends on a particular receiver structure so that it is expressed as:

$$C_{B,1}(t) = \max_Q \sum_m \min_{k \in Q_m} c_f(g_{S,k,m}(t)) \tag{9}$$

$$C_{B,2}(t) = \sum_m \max_k c_f(g_{M,k,m}(t)) \tag{10}$$

for SIC receivers and linear receivers, respectively, where Q is a possible subset of all users, $Q_{m+1}$ is deflated version of $Q_m$ in which the user after decoding at the mth layer has been zeroed, and $Q_l = Q$.

By the fact that the capacity of (9) is apparently equal to that of (8), i.e., $C_{B,1}(t) = C_{A,1}(t)$ the scheduler (8) may be user for simplicity when advanced receivers are involved.

To achieve the maximum capacity through advanced receivers is given by:

$$C_{H,1}(t) = \max\{C_A(t), C_{B,2}(t)\}, \tag{11}$$

in which both metrics of $C_A(t)$ with SIC receivers and $C_{B,2}(t)$ with linear receivers are used to select the best user.

Only one metric is sufficient for the hybrid scheduling if the scheduling policies are switched between $C_A(t)$ and $C_{B,2}(t)$ after the threshold point determined by the number of scheduled users. In practice, it is desirable to choose the point $K_{SW}$ satisfying $e\{C_A(t)\}=e\{C_{B,2}(t)\}$, so that the rule of the modified hybrid scheduler is then

$$C_{H,2}(t) = \begin{cases} C_A(t), & K \pounds K_{sw} \\ C_{B,2}(t), & K > K_{sw} \end{cases}. \tag{12}$$

Since it is often difficult to perfectly know how many users are to be scheduled before the activation of the scheduling method, the hybrid scheme, in which reception is to be constrained as single user SIC (SU-SIC), is proposed and is given by

$$C_{H,3}(t) = \max_{\{S_j\}} \sum_j \max_k \sum_{m \in S_j} c_f(g_{H,k,m}(t)) \tag{13}$$

where $g_{H,k,m}(t)$ is the received SINR obtained by SU-SIC receiver, e.g., the SINR in (7), $S_j$ denotes the jth sub-group of transmit antennas with constraints $U_j S_j = \{1, 2, ..., M\}$ and $I_j S_j = \text{Æ}$. It is defined that SU-SIC receivers cancel out only self interferences but not cancel interferences intended to others, while conventional SIC receivers attempt to get rid of all interferences received from the transmit antennas.

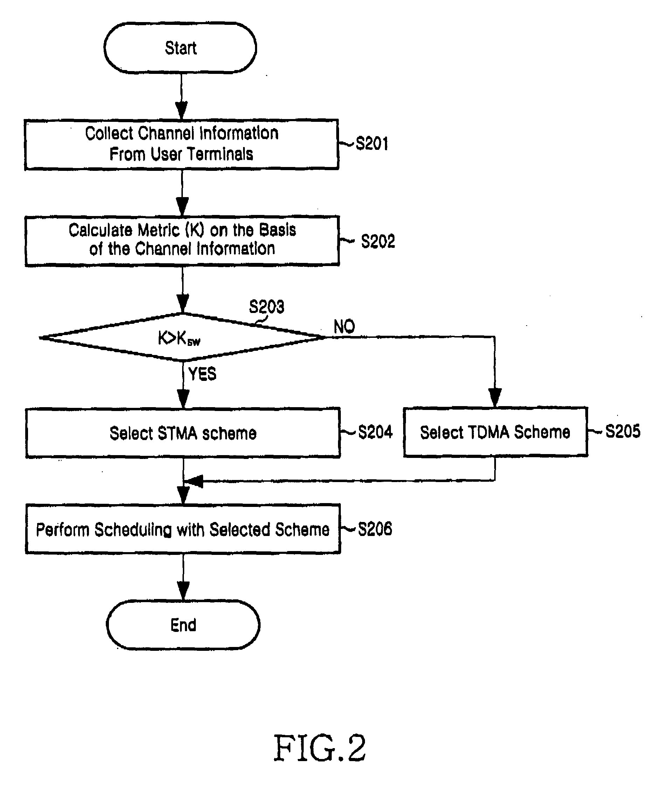

FIG. 2 is a flowchart illustrating a user scheduling method according to one embodiment of the present invention.

As shown in FIG. 2, the base station collect channel information from the mobile terminals at step S201 and calculate a metric (K) on the basis of the channel information at step S202. Sequentially, the base station determines whether or not the metric (K) is greater than a threshold value (Ksw) at step S203. If the metric is greater than the threshold value, the base station selects a space-time multiple access-based scheduling scheme at step S204, and otherwise, the base station selects a time division multiple access-based scheduling scheme at step S205. Once the scheduling scheme is selected, the base station performs the scheduling with the selected scheduling scheme at step S206.

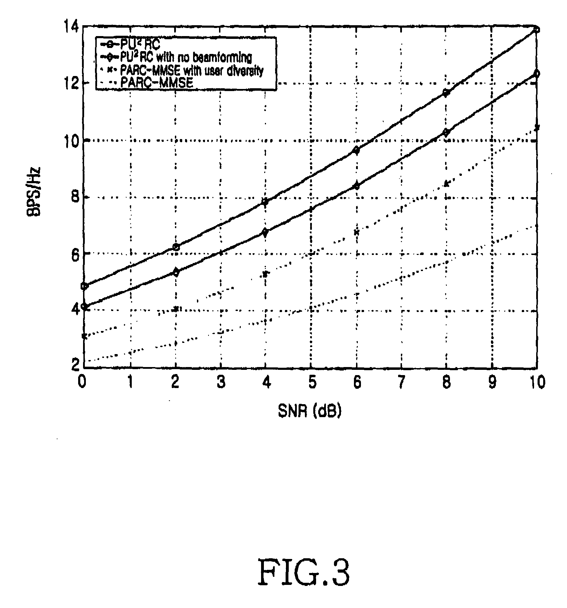

FIG. 3 is a graph illustrating a simulation results of performance comparisons between the MIMO transmission method according to one embodiment of the present invention with or without beamforming and a conventional MIMO transmission method.

As shown in FIG. 3, it is shown that the transmission method of PU2RC according to one embodiment of the present invention outperforms PARC-MMSE because the PU2RC has about 2dB gain of transmit beamforming with a 4-bit feedback over the system without beamforming, and achieves additional user diversity gain over PARC-MMSE with and without user diversity by about 3.5dB and 7dB, respectively. The additional gain over PARC-MMSE with user diversity is user diversity gain in the space domain, which cannot be exploited in PARC schemes. The number of users is assumed to be K=10.

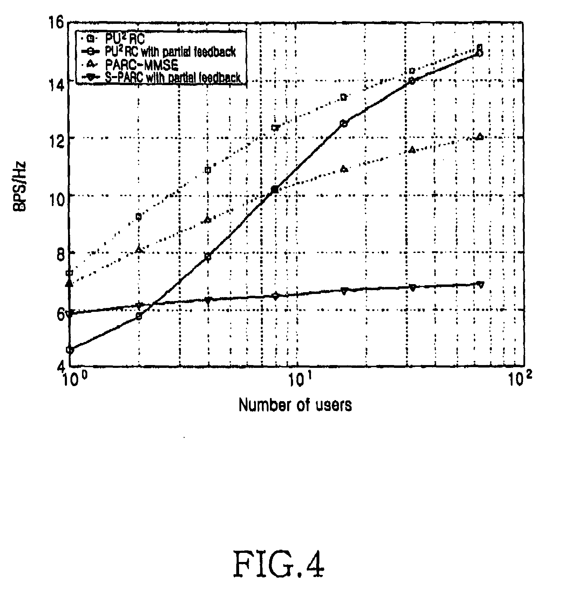

FIG. 4 is a graph illustrating another simulation results of the performance comparisons between the MIMO transmission method according to one embodiment of the present invention with or without partial feedback and conventional ones.

In FIG. 4, the PU2RC of the present invention outperforms conventional PARC-MMSE when feedback information for all transmit antennas are transmitted from user terminals back to the BS, and with the assumption of the partial feedback, i.e., the SINR of the selected basis or antenna vector, PU2RC still has significant gain over PARC and S-PARC. This is because with the partial feedback, S-PARC only exploits one transmit antenna, which results in a limited capacity gain over the number of users, while PU2RC can transmit as many data streams as transmit antennas at its maximum.

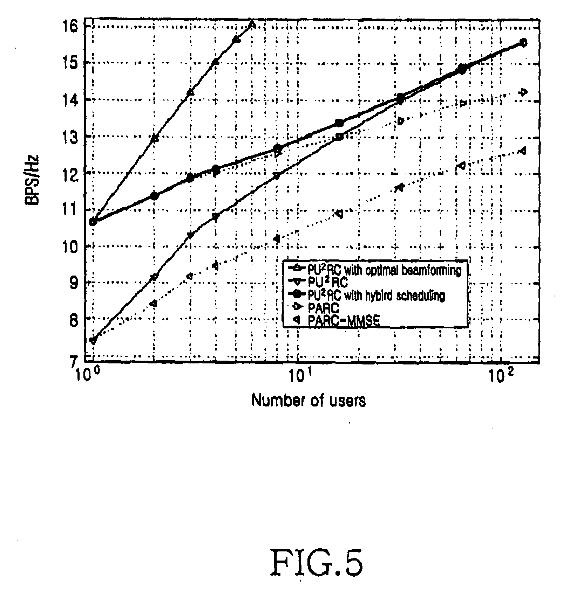

FIG. 5 is a graph illustrating a simulation results of performance comparisons between the MIMO transmission method according to another embodiment of the present invention and a conventional MIMO transmission.

In FIG. 5, it is shown that the performance of PARC using SIC receivers, is better than that of PU2RC when the number of users is less than 7, but PU2RC using liner receivers out performs the PARC for high number of users. As expected from this result, the hybrid scheduling scheme between PU2RC and PARC performs better than both schemes, independent of the number of users.

As described above, the user scheduling method of the present invention performs scheduling with one of TDMA- and STMA-based scheduling schemes which show maximum capacity in different channel environments, such that the system capacity can be optimally maintained regardless of the change of the channel environment.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

**Claims**

1.  A method for scheduling users in multiuser multiple-input multiple-output (MIMO) systems in which a base station performs scheduling on the basis of channel information fed back from a plurality of terminals, comprising:

    calculating a metric for scheduling the users using the channel information;
    selecting one of at least two preinstalled scheduling schemes according to the metric;
    performing the scheduling with the selected scheduling scheme.

2.  The method of claim 1, wherein the metric is a number of users to be scheduled.

3.  The method of claim 2, wherein the step of selecting the scheduling scheme includes:

    determining the calculated metric is greater than a threshold value;
    selecting a first scheduling scheme if the metric is less than or equal to the threshold value; and
    selecting a second scheduling scheme if the metric is greater than the threshold value.

4.  The method of claim 3, wherein the first scheduling scheme is a time division multiple access MIMO scheduling scheme.

5. The method of claim 3, wherein the second scheduling scheme is a space-time multiple access MIMO scheduling scheme.

6. The method of claim 3, wherein the first scheduling scheme is a time division multiple access MIMO scheduling scheme and the second scheduling scheme is a space-time multiple access MIMO scheduling scheme.

7. The method of claim 3, wherein the threshold value is 7.

8. The method of claim 3, wherein the first scheduling scheme is a per-antenna rate control (PARC) scheme.

9. The method of claim 3, wherein the second scheduling scheme is a per-user unitary rate control (PU2RC) scheme.

10. The method of claim 3, wherein the first scheduling scheme is a per-antenna rate control (PARC) scheme and the second scheduling scheme is a per-user unitary rate control (PU2RC) scheme.

11. The method of claim 10, wherein the threshold value is 7.

FIG.1

FIG.2

FIG.3

FIG.4

FIG.5

**European Patent Office**

**EUROPEAN SEARCH REPORT**

Application Number

EP 06 00 4503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/125040 A1 (WALTON JAY R ET AL) 3 July 2003 (2003-07-03) * paragraph [0011] * * paragraph [0043] - paragraph [0046] * * paragraph [0062] - paragraph [0067] * * paragraph [0082] * * figure 2A * | 1-11 | INV. H04B7/06 ADD. H04Q7/38 |
| Y | J.S. KIM ET AL: "On the Performance of Multiuser MIMO Systems in Beyond 3G: Beamforming, Feedback and Scheduling" 13TH MEETING OF WIRELESS WORLD RESEARCH FORUM, vol. WWRF13, 2 March 2005 (2005-03-02), - 3 March 2005 (2005-03-03) pages 1-7, XP002379654 JEJI ISLAND, KOREA * the whole document * | 1-11 | |
| P,X | EP 1 564 906 A (SAMSUNG ELECTRONICS CO., LTD; SEOUL NATIONAL UNIVERSITY INDUSTRY FOUND) 17 August 2005 (2005-08-17) * paragraph [0003] - paragraph [0012] * * paragraph [0016] - paragraph [0017] * * paragraph [0020] * * figure 1 * | 1 | TECHNICAL FIELDS SEARCHED (IPC) H04B H04Q |

-/--

The present search report has been drawn up for all claims

| Place of search | Date of completion of the search | Examiner |
|---|---|---|
| Munich | 4 May 2006 | Rabe, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 4503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUNG JIN KIM ET AL: "Space-time technique for wireless multiuser MIMO systems with SIC receivers" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 3, 5 September 2004 (2004-09-05), pages 2013-2017, XP010754286 ISBN: 0-7803-8523-3 * the whole document * ----- | 1-11 | |
| A | HTTP://MOBILE.SNU.AC.KR/KOREAN/...: "Per-User Unitary Rate Control (PU2RC), Multi-User MIMO with Side Information" SAMSUNG, 14 June 2004 (2004-06-14), pages 1-29, XP002379655 Korea * the whole document * ----- | 1-11 | |

TECHNICAL FIELDS SEARCHED    (IPC)

The present search report has been drawn up for all claims

| Place of search | Date of completion of the search | Examiner |
|---|---|---|
| Munich | 4 May 2006 | Rabe, M |

EPO FORM 1503 03.82 (P04C01)

## ANNEX TO THE EUROPEAN SEARCH REPORT
## ON EUROPEAN PATENT APPLICATION NO.

EP 06 00 4503

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2006

| Patent document cited in search report | | Publication date | Patent family member(s) | | Publication date |
|---|---|---|---|---|---|
| US 2003125040 | A1 | 03-07-2003 | BR | 0213913 A | 26-04-2005 |
| | | | CN | 1613201 A | 04-05-2005 |
| | | | EP | 1442538 A1 | 04-08-2004 |
| | | | JP | 2005509360 T | 07-04-2005 |
| | | | WO | 03041300 A1 | 15-05-2003 |
| EP 1564906 | A | 17-08-2005 | CN | 1674463 A | 28-09-2005 |
| | | | JP | 2005237006 A | 02-09-2005 |

EPO FORM P0459

For more details about this annex : see Official Journal of the European Patent Office, No. 12/82